Europäisches Patentamt

European Patent Office

Office européen des brevets

(11) Numéro de publication : **0 401 069 B1**

# (12) FASCICULE DE BREVET EUROPEEN

(45) Date de publication du fascicule du brevet :
**11.08.93 Bulletin 93/32**

(51) Int. Cl.$^5$ : **F16L 27/08**, F16L 27/02

(21) Numéro de dépôt : **90401254.9**

(22) Date de dépôt : **11.05.90**

(54) **Joint hydraulique tournant à équilibrage hydrostatique.**

(30) Priorité : **31.05.89 FR 8907168**

(43) Date de publication de la demande :
**05.12.90 Bulletin 90/49**

(45) Mention de la délivrance du brevet :
**11.08.93 Bulletin 93/32**

(84) Etats contractants désignés :
**BE CH DE ES FR IT LI SE**

(56) Documents cités :
**DE-A- 2 540 240**
**DE-A- 3 600 884**
**FR-A- 2 041 468**

(73) Titulaire : **HYDRO RENE LEDUC**
**Allée René Leduc**
**F-54122 Azerailles (FR)**

(72) Inventeur : **Porel, Louis-Claude**
**Rue de Moulins, Jeanmenil**
**F-88700 Rambervillers (FR)**

(74) Mandataire : **Loyer, Bertrand et al**
**Cabinet Pierre Loyer 77, rue Boissière**
**F-75116 Paris (FR)**

Jouve, 18, rue Saint-Denis, 75001 PARIS

**Description**

La présente invention concerne le domaine des joints tournant hydrauliques par l'intermédiaire desquels une conduite hydraulique alimentée en liquide à haute pression peut être reliée à une autre conduite gui tourne sur elle même autour de son axe. Ce genre de jonction entre une conduite fixe et une conduite tournante pose des problèmes très ardus au point de vue étanchéité et équilibrage, au point que l'on peut dire qu'il n'existe pas sur le marché de dispositifs qui soient vraiment satisfaisants.

Dans le brevet français 2 041 468 au nom de la demanderesse, on a décrit une pompe hydraulique à plateau biais dans laquelle l'étanchéité entre des pièces tournantes et des pièces fixes était obtenue par interposition d'un noyau biconique entre deux éléments sphériques.

Dans ce brevet, le plot est utilisé pour réaliser un joint transmettant un débit entre deux canalisations alignées et non pour transmettre une pression entre deux canalisations décalées.

La présente invention concerne l'application de ce genre de disposition au problème particulier de la jonction de deux canalisations hydrauliques l'une fixe et l'autre animée d'un mouvement rotatif.

Il a été proposé d'appliquer une disposition semblable à celle du brevet français 2 041 468 pour la jonction de deux canalisations, l'une tournante, l'autre fixe dans le brevet allemand 36 00 884. Ce document propose un dispositif comportant une canalisation tournante terminée par un piston à tête sphérique disposé devant une face plane d'extrémité d'une canalisation fixe. Dans ce dispositif, un plot dont la face sur laquelle appuie le piston est conique tandis que la face en appui sur la canalisation fixe est plane. Il s'est avéré que ce dispositif ne peut pas donner satisfaction spécialement lorsqu'il est mis en oeuvre pour des hautes pressions et hautes vitesses.

En effet, la face plane du plot glisse mal sur la face plane d'extrémité de la canalisation fixe ce qui produit d'abord un échauffement du fluide, puis un échauffement des pièces en contact.

De surcroît, du fait de l'appui plan, la rotation du plot sur la sphère se fait toujours sur la même ligne de contact et le film d'huile indispensable au bon fonctionnement ne se maintient pas.

La présente invention résout le problème en proposant un dispositif de liaison entre une canalisation hydraulique fixe et une canalisation hydraulique animée d'un mouvement de rotation sur elle-même caractérisée par le fait que : la canalisation fixe comporte à son extrémité un piston mobile axialement, muni d'une tête sphérique; la canalisation mobile comporte une extrémité à axe excentré, muni également d'une tête sphérique ; un plot tournant biconique traversé par un orifice central étant intercalé entre les deux têtes sphériques.

Selon un premier mode de réalisation, la canalisation tournante est portée par un ou plusieurs paliers ou roulements.

Selon un deuxième mode de réalisation, la canalisation tournante est munie d'une collerette prenant appui sur un support par l'intermédiaire d'un palier hydrostatique.

A titre d'exemple et pour faciliter la compréhension de l'invention, on a représenté aux dessins annexés :
- Figure 1 : une vue schématique en coupe longitudinale d'un premier mode de réalisation selon l'invention;
- Figure 2 : une vue schématique en coupe longitudinale d'un deuxième mode de réalisation de l'invention.

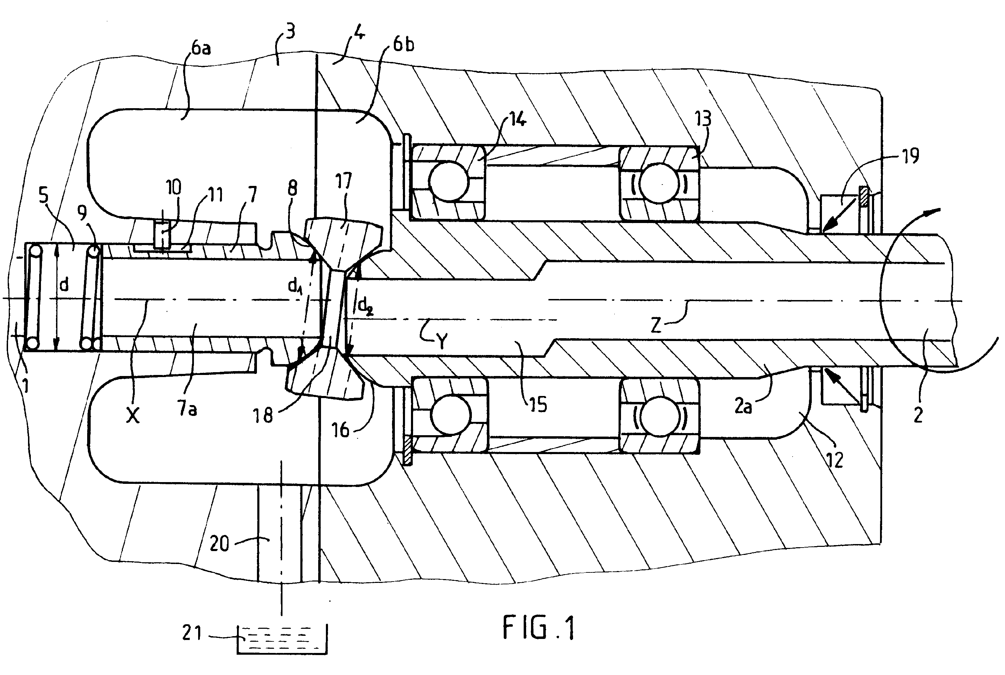

En se reportant à la figure 1 on voit que le dispositif de liaison hydraulique selon la présente invention est destiné à assurer la liaison entre une canalisation hydraulique fixe 1 et une canalisation hydraulique tournante 2. La canalisation 1 est disposée dans une pièce 3, tandis que la canalisation tournante 2 est disposée dans une pièce 4, les pièces 3 et 4 étant fixées l'une à l'autre par tous moyens mécaniques appropriés qui ne sont pas représentés car ils ne font pas partie de la présente invention.

La canalisation 1 débouche dans un alésage 5 qui lui-même débouche dans une chambre 6a pratiquée dans la pièce 3.

Dans l'alésage 5 coulisse un piston 7 muni d'une tête sphérique 8. Le piston 7 est contretenu par un ressort 9 et est muni de moyen destiné à l'empêcher de pivoter sur lui-même, ces moyens pouvant être par exemple un ergot 10 venant s'engager dans une rainure 11 ménagée sur un des côtés du piston.

La canalisation 2 comporte une extrémité de plus grand diamètre extérieur 2a coaxial à la canalisation 2 c'est-à-dire que l'axe de cette extrémité élargie 2a est le même que l'axe Z de la canalisation 2. Cette extrémité 2a est portée par deux paliers 13 et 14 qui sont placés dans une chambre 12 ménagée dans la pièce 4. A l'intérieur de la partie épaissie 2a, la canalisation 2 elle-même est désaxée c'est-à-dire qu'elle comporte une partie 15 dont l'axe Y est décalé par rapport à l'axe Z de la canalisation 2. A l'extrémité de cette extrémité décalée 15 de la canalisation 2 est disposée une tête sphérique 16 dont le centre est placé sur l'axe Y. Il en résulte que la tête sphérique 16 est décalée par rapport à la tête sphérique 8 comme cela apparaît clairement sur la figure 1.

Entre les têtes sphériques 8 et 16 est disposé un plot biconique 17, dont l'orifice central 18 a un diamètre pratiquement égal au diamètre de la canalisation 15 et de l'alésage interne 7a du piston 7. Comme cela est représenté à la figure 1, la tête sphérique 16 de l'extrémité de la canalisation 15 fait saillie dans une chambre 6b, pratiquée dans la pièce 4, cette chambre 6b se trouvant dans le prolongement de la chambre 6a de la pièce 3.

Si l'on appelle d1 le diamètre du cercle de contact de la tête sphérique 8 avec le plot biconique 17 et d2 le diamètre du cercle de contact de la tête sphérique avec l'autre face du plot biconique 17, les dimensions des différentes pièces sont de préférence déterminées de façon telle que d1 = d2. D'autre part si l'on appelle d le diamètre de l'alésage 5 il est nécessaire que d soit égal ou légèrement supérieur à d1 et d2 ; il en résulte alors que si l'on appelle P la pression hydraulique arrivant par la canalisation 1, S la surface du cercle ayant d pour diamètre, S1 la surface du cercle ayant d1 pour diamètre et S2 la surface du cercle ayant d2 pour diamètre, on a, d'une part :

$$P \times S > P \times S1 \text{ et } P \times S1 = P \times S2.$$

Il en résulte que le plot biconique 17 est hydrostatiquement équilibré et que il n'est maintenu contre les têtes sphériques 8 et 16 pratiquement que par la force du ressort 9, la force d'appui due à la pression hydraulique étant faible.

D'autre part, du fait du décalage des axes X de l'alésage 5 et Y de la canalisation 15, le plot 17 est animé en permanence d'un mouvement de rotation sur lui-même lorsque la canalisation 2 est elle-même animée d'un mouvement tournant.

Comme cela est représenté, le logement 12 dans lequel sont situés les paliers ou roulements 13 et 14 communique avec la chambre 6 formée par les deux chambres 6a et 6b, laquelle chambre 6 est, au moyen d'une canalisation 20, mise en liaison avec le réservoir 21. La canalisation 20 a pour but de récolter les différentes fuites qui se produisent au contact entre les têtes sphériques 8 et 16 et le plot biconique 17 et n'est donc pas soumise à la pression. L'étanchéité de la canalisation 2 est assurée par un joint spi 19 qui n'a qu'un rôle d'étanchéité et n'a à subir pratiquement aucune pression hydraulique du fait du drainage des fuites par la canalisation 20. Le dispositif représenté à la figure 1 constitue donc un joint tournant permettant d'assurer une liaison étanche entre une canalisation hydraulique fixe 1 et une canalisation hydraulique tournante 2.

Il s'avère cependant que cette disposition, si elle assure une bonne étanchéité entre les deux canalisations, n'est pas très bonne parce qu'elle est mal équilibrée. En effet, si par exemple le diamètre de l'alésage 5 est de 27 mn, la section S de cet alésage est de 5,72 cm2 ce qui, à une pression de 400 bares, représente une poussée de près de 2,3 tonnes sur la tête sphérique 16, poussée qui doit être encaissée par les roulements 13 et 14. Il en résulte que les roulements 13 et 14 risquent d'être rapidement détériorés.

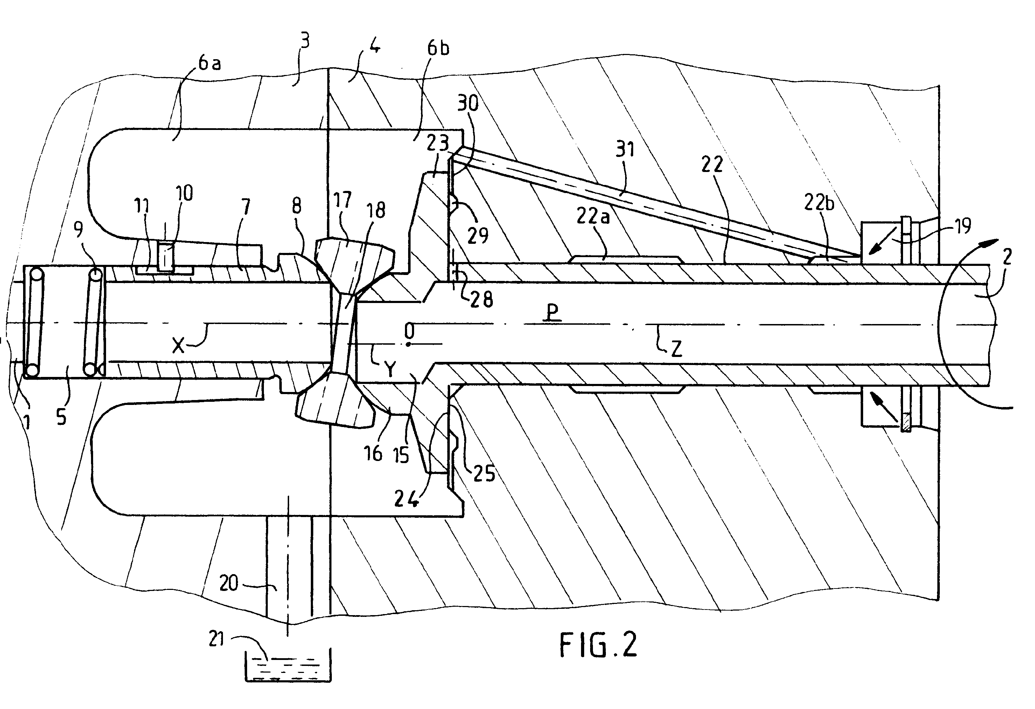

La figure 2 répésente une variante de réalisation du dispositif de liaison hydraulique de la figure 1 dans lesquels les efforts sont compensés par un palier hydrostatique. Sur cette figure 2 les mêmes éléments que ceux représentés à la figure 1 portent les mêmes références.

Comme on peut le voir sur cette figure, la canalisation 2 est disposée à l'intérieur d'un alésage 22, qui débouche directement dans la chambre 6b, la canalisation 2 est, comme dans l'exemple précédent, prolongée par une canalisation 15 d'axe Y excentré par rapport à l'axe Z de la canalisation 2. La canalisation 2 comporte en outre une collerette 23 solidaire de ladite canalisation 2 et de la tête sphérique 16, cette collerette 23 étant, elle, centrée sur l'axe Z. La face arrière 24 de cette collerette 23 est plane, perpendiculaire à l'axe Z, et appuie sur la face plane 25 qui constitue la paroi de la chambre 6b, cette face 25 étant également perpendiculaire à l'axe 2. L'alésage 22 débouche dans la chambre 6b par un chanfrein 27 et l'espace défini par ce chanfrein est mis en communication avec le liquide hydraulique sous pression se trouvant dans la canalisation 2 au moyen d'un perçage 28. D'autre part, la face plane 25 sur laquelle la face plane 24 de la collerette 23 prend appui comporte une gorge circulaire 29 communiquant avec la chambre 6b par un ou plusieurs espaces 30. Si l'on désigne par "a" la jonction entre le chanfrein 27 et la face d'appui 25 et, "b" le rebord de la gorge circulaire 29, on ménage entre le point "a" et le point "b" un très faible jeu séparant les faces 24 et 25 de façon qu'un film d'huile puisse s'immiscer entre lesdites faces 24 et 25, la pression de ce film d'huile étant égale à P en "a" est nulle en "b". Il suffit alors de déterminer l'importance de ce jeu pour que la somme des efforts dus à la pression de a à b soit égale ou pratiquement égale à P x S. On obtient ainsi un équilibrage hydrostatique de la canalisation 2 dans la pièce 4. Il n'est alors plus nécessaire de disposer des roulements tels que 13 et 14 et, si l'on en dispose, ils ne seront soumis à aucun effort.

De préférence on ménage entre l'alésage 22 et la canalisation 2 un faible interstice dans lequel peut s'immiscer le liquide hydraulique en provenance de la canalisation 28. Le liquide qui s'introduit dans ce jeu est collecté dans une ou plusieurs chambres circulaires 22a et/ou 22b et ces fuites sont collectées par des canalisations telles que 31. La canalisation 2 est alors portée elle aussi par un palier hydrostatique.

## Revendications

1. Dispositif de liaison étanche entre une canalisation hydraulique fixe (1) et une canalisation hydraulique tournante (2) caractérisée par le fait que la canalisation fixe (1) comporte à son extrémité un piston (7) mobile axialement, muni d'une tête sphérique (8); la canalisation tournante (2) comporte une extrémité (15) à axe (Y) excentré par rapport aux axes (X) et (Z) des canalisations (1) et (2) et munie d'une tête sphérique (16); un plot tournant biconique (17) traversé par un orifice central (18) étant intercalé entre les deux têtes sphériques (8,16).

2. Dispositif selon la revendication 1 dans lequel les cercles de contact entre les deux têtes sphériques (8,16) et les deux faces du plot biconique (17) ont des diamètres (d1,d2) égaux, le diamètre (d) du piston (7) portant la tête sphérique (8) étant égal ou légèrement supérieur aux diamètres (d1,d2) desdits cercles de contact.

3. Dispositif selon l'une quelconque des revendications 1 et 2 dans lequel la poussée axiale exercée sur la tête sphérique (16) par le piston (7) est encaissée par un ou plusieurs roulements (13,14) disposés dans la pièce (4) portant la canalisation tournante (2).

4. Dispositif selon l'une quelconque des revendications 1 et 2 dans lequel la poussée axiale exercée par la tête sphérique (16) par le piston (7) est encaissée par un palier hydrostatique.

5. Dispositif selon la revendication 4 caractérisé en ce que le palier hydrostatique est constitué par une collerette (23) centrée sur l'axe (Z) de la canalisation tournante (2), la face arrière (24) de ladite collerette étant perpendiculaire audit axe (Z) et prenant appui sur la face arrière (25) d'une chambre (6b) ménagée dans le corps (4) portant ladite canalisation tournante (8), ladite face arrière (25) étant également perpendiculaire audit axe (Z) des moyens étant disposés pour permettre au liquide hydraulique sous pression de s'immiscer entre les faces (24) et (25) de façon à former un palier liquide.

6. Dispositif selon la revendication 5, caractérisé en ce que la largeur du palier liquide mesurée à partir d'un point "a" ou le film d'huile est à sa pression maximum jusqu'à un point "b" où cette pression est nulle et déterminée de façon que la somme des efforts due à la pression de "a" en "b" soit égale ou pratiquement égale à la force d'appui du piston (7) sur le plot bi-conique (17).

7. Dispositif selon la revendication 6, dans lequel la pression maximum est amenée au point "a" par un perçage (28) communiquant avec la canalisation tournate (2), tandis que le point "b" correspond à une gorge circulaire (29) débouchant dans la chambre (6b) qui est elle-même reliée au réservoir (20) par une canalisation (21).

8. Dispositif selon l'une quelconque des revendications 5 à 7, dans lequel la canalisation tournante (2) est elle-même portée par un palier fluide constitué par un film d'huile disposé dans l'interstice aménagé entre l'alésage (22) pratiqué dans la pièce (4) portant la canalisation (2) et dans lequel est placée cette canalisation (2), des chambres circulaires (22a, 22b) étant ménagées dans cet interstice et l'une de ces chambres au moins (22b) étant drainée par une canalisation (31) vers la chambre (6b).

## Patentansprüche

1. Vorrichtung für eine dichte Verbindung zwischen einer feststehenden Hydraulikleitung (1) und einer hydraulischen Drehleitung (2), gekennzeichnet durch die Tatsache, daß die feststehende Leitung (1) an ihrem Ende einen axial beweglichen Kolben (7) aufweist, der mit einem Kugelkopf (8) versehen ist, und daß die Drehleitung (2) ein Ende (15) aufweist, dessen Achse (Y) zu den Achsen (X) und (Z) der Leitungen (1) und (2) exzentrisch liegt und das mit einem Kugelkopf (16) versehen ist, wobei ein doppelkonisches Drehteil (17), das von einer zentralen Öffnung (18) durchlaufen wird, zwischen die beiden Kugelköpfe (8, 16) zwischengeschaltet ist.

2. Vorrichtung nach Anspruch 1, bei der die Kontaktkreise zwischen den zwei Kugelköpfen (8, 16) und den zwei Seiten des doppelkonischen Teils (17) gleiche Durchmesser (d1, d2) aufweisen, wobei der Durchmesser (d) des Kolbens (7), der den Kugelkopf (8) trägt, gleich den Durchmessern (d1, d2) dieser Kontaktkreise oder etwas größer als diese ist.

3. Vorrichtung nach einem der Ansprüche 1 oder 2, bei welcher der durch den Kolben (7) auf den Kugelkopf (16) ausgeübte Axialdruck durch ein oder mehrere Wälzlager (13, 14) aufgenommen wird, die in dem Teil (4) angeordnet sind, das die Drehleitung (2) trägt.

4. Vorrichtung nach einem der Ansprüche 1 oder 2, bei welcher der durch den Kolben (7) über den kugelförmigen Kopf (16) ausgeübte Axialdruck durch ein Hydrostatik-Lager aufgenommen wird.

5. Vorrichtung nach Anspruch 4, dadurch gekennzeichnet, daß das Hydrostatik-Lager durch einen auf der Achse (Z) der Drehleitung (2) zentrierten Kragen (23) gebildet ist, dessen hintere Fläche (24) senkrecht zur Achse (Z) verläuft und sich an der rückwärtigen Fläche (25) einer Kammer (6b) abstützt, die in dem die Drehleitung (2) tragenden Körper (4) ausgebildet ist, wobei die rückwärtige fläche (25) auch senkrecht zur Achse (Z) verläuft, und Mittel dazu vorgesehen sind, die Hydraulikflüssigkeit unter Druck zwischen die Flächen (24) und (25) so eindringen zu lassen, daß sie ein Flüssigkeits-Lager bildet.

6.  Vorrichtung nach Anspruch 5, dadurch gekennzeichnet, daß die Dicke des Flüssigkeits-Lagers, gemessen von einem Punkt "a", bei dem der Ölfilm seinen Maximaldruck aufweist, bis zu einem Punkt "b", bei dem dieser Druck Null ist, so bestimmt wird, daß die Summe der Kräfte, aufgrund des Drucks von "a" nach "b" gleich oder praktisch gleich der Stützkraft des Kolbens (7) auf dem doppelkonischen Teil (17) ist.

7.  Vorrichtung nach Anspruch 6, bei welcher der Maximaldruck dem Punkt "a" durch eine Bohrung (28) zugeleitet wird, die mit der Drehleitung (2) in Verbindung steht, während der Punkt "b" einer Kreisnut (29) entspricht, die in die Kammer (6b) mündet, die ihrerseits durch eine Leitung (20) mit dem Speicher (21) verbunden ist.

8.  Vorrichtung nach einem der Ansprüche 5 bis 7, bei welcher die Drehleitung (2) selbst durch ein Flüssigkeits-Lager getragen ist, das durch einen Ölfilm im Zwischenraum zwischen der Bohrung (22), die in dem Teil (4) ausgebildet ist, und der Leitung (2) gebildet wird und in dem diese Leitung (2) angeordnet ist, wobei kreisförmige Kammern (22a, 22b) in diesem Zwischenraum ausgebildet sind und wenigstens eine (22b) dieser Kammern durch einen Kanal (31) zur Kammer (6b) hin dräniert wird.

**Claims**

1.  A leakproof connexion device between a stationary hydraulic conduit (1) and a rotating conduit (2), characterized in that the stationary conduit (1) comprises at its end an axially movable piston (7), provided with a spherical head (8), the rotating hydraulic conduit (2) comprising an end (15) the axis (Y) of which being eccentric with regard to the axis (X) and (Z) of the conduits (1, 2) and provided with a spherical head (16), a rotating biconical plug through with a central orifice (18) passes being inserted between the two spherical heads (8, 16).

2.  A device according to Claim 1, wherein the circles of contact between the two spherical heads (8, 16) and the two faces of the biconical plug (7) have equal diameters (d1, d2), the diameter (d) of the piston (7) supporting the spherical head (8) being equal to or somewhat greater than the diameters (d1, d2) of said circles of contact.

3.  A device according to Claim 1 or 2, wherein the axial thrust exerted by the piston (7) onto the spherical head (16) is taken up by a bearing or a plurality of bearings (13, 14) mounted in the piece (4) supporting the rotating conduit (2).

4.  A device according to Claim 1 or 2, wherein the axial thrust exerted by the piston (7) onto the spherical head (16) is taken up by a hydrostatical bearing.

5.  A device according to Claim 4, characterized in that the hydrostatical bearing is constituted by a collar (23) centered with regard to the axis (Z) of the rotating conduit (2), the back face (24) of said collar being perpendicular to said axis (Z) and resting on the back face (25) of a chamber (6b) provided in the body (4) supporting said rotating conduit (8), said back face (25) also being perpendicular to said axis (Z), means being provided to permit the pressurized hydraulic liquid to penetrate between the faces (24) and (25) so as to form a liquid bearing.

6.  A device according to Claim 5, characterized in that the width of the liquid bearing, measured from a point "a" where the oil film is at its maximum pressure and to a point "b" where this pressure is zero, is determined in such a way that the sum of the strains due to the pressure of "a" to "b" is equal to or almost equal to the bearing force of the piston (7) onto the biconical plug (17).

7.  A device according to Claim 6, wherein the maximum pressure is brought to the point "a" by a hole (28) communicating with the rotating conduit (2), whereas the point "b" corresponds to a circular groove (29) joining the chamber (6b) which is in turn connected to the collecting basin (21) via a conduit (20).

8.  A device according to any one of Claims 5-7, wherein the rotating conduit (2) is in turn carried by a fluid bearing constituted by an oil film disposed in the clearance provided between the bore (22) carried out in the piece (4) carrying the conduit (2) and the conduit (2) placed therein, circular chambers (22a, 22b) being provided in this clearance, at least one (22b) of which being drained via a conduit (31) into the chamber (6b).

FIG.1

EP 0 401 069 B1

FIG.2